# EUROPEAN PATENT APPLICATION

(11) **EP 2 180 571 A2**
(43) Date of publication of application: **28.04.2010**
(21) Application number: 09171157.2
(22) Date of filing: 24.09.2009
(51) Int. Cl.: H02J 3/14, H02J 3/28, H02J 13/00

(54) **Centralized energy management in distributed systems**

(30) Priority: 21.10.2008 US 255506
(71) Applicant: Avaya Inc., Basking Ridge, New Jersey 07920-2332 (US)
(72) Inventor: Kradjel, Howard G., Lincroft, NJ 07738 (US); Michaelis, Paul Roller, Louisville, CO 80027 (US); Greenberg, Robert Laurence, Red Bank, NJ 07701 (US)
(74) Representative: Williams, David John

(57) **Abstract**

A distributed system of appliances that comprises a centralized energy-use controller to coordinate the use of energy among a plurality of distributed and interconnected appliances is disclosed. For example, the centralized controller directs when each appliance refrains from using energy from its energy-storage device during intervals when the energy-storage device is capable of providing energy to the appliance but the centralized power supply is not, and when each appliance can consume energy from its energy-storage device during intervals when both the energy-storage device and the centralized power supply are capable of providing power to the appliance.

## Description

### Field of the Invention

The present invention relates to energy management in general, and, more particularly, to the centralized management of distributed and interconnected appliances.

### Background of the Invention

Energy is expensive, and, therefore, the need exists for more energy-efficient products.

### Summary of the Invention

The present invention affects energy-efficiency in a distributed system of appliances without some of the costs and disadvantages for doing so in the prior art. For example, the illustrative embodiment comprises a centralized energy-use controller to coordinate the use of energy among a plurality of distributed and interconnected appliances. The coordination of the use of energy among the appliances enables efficiencies that are not possible otherwise.

For example, the centralized controller directs:
■ when each appliance uses energy from a centralized power supply, and
■ when each appliance uses energy from an energy-storage device that is associated with the appliance, and
■ when each appliance recharges its energy-storage device with power from the centralized power supply, and
■ when each appliance transmits energy from its energy-storage device to the centralized power supply for use by another appliance, and
■ when each appliance refrains from using energy from its energy-storage device during intervals when the energy-storage device is capable of providing energy to the appliance but the centralized power supply is not, and
■ when each appliance can consume energy from its energy-storage device during intervals when both the energy-storage device and the centralized power supply are capable of providing power to the appliance, and
■ when each appliance can consume energy for one use and when each appliance cannot consume energy for a second use.

This enables the controller to reduce the total amount of power consumed by the system as a whole while deliberately choosing which appliances use power and for what uses. Furthermore, some embodiments of the present invention enable systems to conform with regulations that are intended to improve energy efficiency by imposing limits on the amount of electrical power a device is permitted to draw from a centralized power source while the device is not being actively used. For example, the Energy Star requirements in the United States set a limit to how much power a compliant telephone is permitted to draw when there is not an active telephone call. The problem this creates for telephones in business environments is that, even when there is no call in-progress, the telephones nevertheless display a tremendous amount of important information visually - such as whether there is new voicemail, whether the phone is forwarded, whether "do not disturb" is active, whether an incoming call had not been answered, and so on. In many cases, the energy required to populate and illuminate a typical back-lit LCD display exceeds the amount permitted for telephones that are not being actively used.

In accordance with an illustrative embodiment of the present invention, a business telephone that complies with energy efficiency regulations is not permitted to draw more than 10 watts via power-over-Ethernet while the phone is not in use. Assume also that the telephone's back-lit LCD display requires 15 watts. In accordance with an illustrative embodiment, the central control mechanism would vary the manner in which the phone utilizes the 10 watts it is permitted to draw. For example, during non-business hours, the telephone could be instructed to turn off its display (except when the phone is being used) and instructed to draw 10 watts via power-over-Ethernet to recharge its battery. During business hours, the telephone could be instructed to keep its 15-watt display active, and instructed to draw the legally-permitted 10 watts via the power-over-Ethernet while drawing the remaining required 5 watts from the on-board rechargeable battery. The benefit of the proposed approach is that the telephone is able to keep its 15-watt display active throughout the business day, while never exceeding the 10-watt limitation imposed by the government's energy efficiency regulations.

The illustrative embodiment comprises: (1) a first appliance associated with a first energy-storage device; (2) a second appliance associated with a second energy-storage device; (3) a power supply for providing energy to the first appliance and the second appliance; and (4) an energy-use controller for directing: (i) when the first appliance uses energy from the power supply, (ii) when the first appliance uses energy from the first energy-storage device, and (iii) when the first appliance recharges the first energy-storage device, (iv) when the second appliance uses energy from the power supply, (v) when the second appliance uses energy from the second energy-storage device, and (vi) when the second appliance recharges the second energy-storage device.

### Brief Description of the Drawings

Figure 1 depicts a block diagram of the salient components of a distributed system in accordance with the illustrative embodiment.

Figure 2 depicts a block diagram of the salient components of hub 101 in accordance with the illustrative embodiment.

Figure 3 depicts a block diagram of the salient components of appliance 102-*i* in accordance with the illustrative embodiment of the present invention.

Figure 4 depicts a flowchart of the salient tasks associated with the operation of the illustrative embodiment of the present invention.

Figure 5 depicts a flowchart of the salient tasks associated with the operation of task 401-*i*.

### Detailed Description

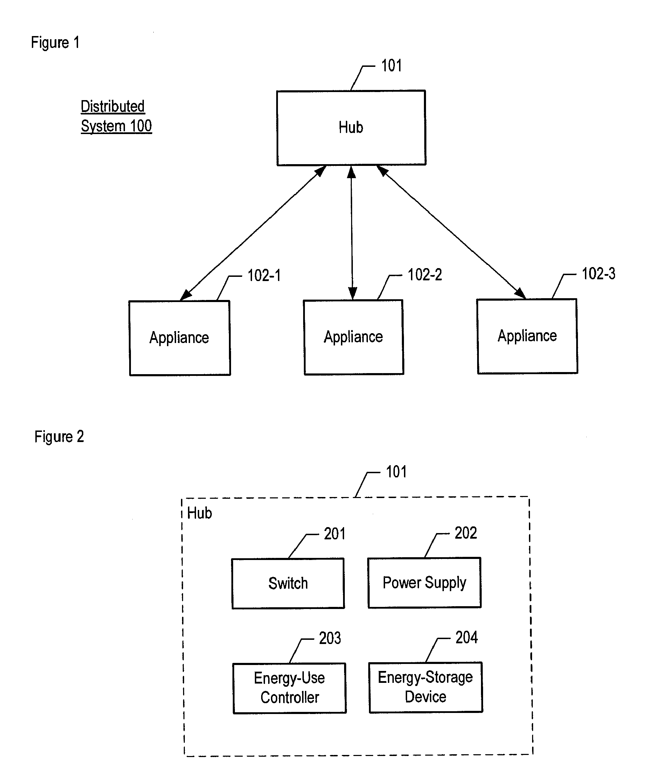

**Figure 1** depicts a block diagram of the salient components of distributed system 100 in accordance with the illustrative embodiment of the present invention. Distributed system 100 comprises: hub 101 and appliances 102-1 through 102-3, interconnected as shown. In accordance with the illustrative embodiment, distributed system 100 is a telecommunications system, but it will be clear to those skilled in the art, after reading this disclosure, how to make and use alternative embodiments of the present invention that provide another function.

Although the illustrative embodiment has a star topology, it will be clear to those skilled in the art, after reading this disclosure, how to make and use alternative embodiments of the present invention that have any topology (*e.g.*, ring, mesh, *etc.*).

Although the illustrative embodiment comprises three appliances, it will be clear to those skilled in the art, after reading this disclosure, how to make and use alternative embodiments of the present that comprise any number of appliances.

Although the illustrative embodiment comprises one "hub," it will be clear to those skilled in the art, after reading this disclosure, how to make and use alternative embodiments of the present invention that comprise any number of hubs.

Hub 101 comprises hardware and software for providing energy to appliances 102-1 through 102-3, for controlling the use of energy by appliances 102-1 through 102-3, and for coordinating communications among appliances 102-1 through 102-3. The details of hub 101 are described in detail below and in the accompanying figures.

Appliance 102-*i*, wherein *i* ∈ {1, 2, 3}, is hardware and software for providing telecommunications service to its user. Although appliance 102-*i* functions as a telecommunications terminal, it will be clear to those skilled in the art, after reading this disclosure, how to make and use alternative embodiments of the present invention in which appliance 102-*i* performs another function.

The details of appliance 102-*i* are described in detail below and in the accompanying figures.

**Figure 2** depicts a block diagram of the salient components of hub 101 in accordance with the illustrative embodiment. Hub 101 comprises: switch 201, power supply 202, energy-use controller 203, and energy-storage device 204.

In accordance with the illustrative embodiment, hub 101 is the switch for distributed system 100, but it will be clear to those skilled in the art, however, after reading this disclosure, how to make and use alternative embodiments of the present invention in which hub 101 performs another function.

In accordance with the illustrative embodiment, hub physically houses switch 201, power supply 202, energy-use controller 203, and energy-storage device 204 but it will be clear to those skilled in the art, after reading this disclosure, how to make and use alternative embodiments of the present invention in some or all of these components are separately housed.

Switch 201 is hardware and software for coordinating telecommunications for appliances 102-1, 102-2, and 102-3. It is clear to those skilled in the art how to make and use switch 201.

Power supply 202 is hardware for providing energy to hub 101 and appliances 102-1 through 102-3 from an external source that is not shown in the figures. It is clear to those skilled in the art how to make and use power supply 202.

Energy-use controller 203 is hardware and software for directing how and when appliance 102-*i* uses and uses energy. In particular, energy-use controller 203 directs:
i. when and how much energy appliance 102-*i* can use to, for example and without limitation, recharge its own energy-storage device, and
ii. when and how much energy appliance 102-*i* can consume to, for example and without limitation, provide telecommunications-related functions, and
iii. when and how much energy appliance 102-*i* can draw from power supply 202 and energy-storage device 204, and
iv. when and how much energy appliance 102-*i* can draw from its own energy-storage device, and
v. when and for what functions appliance 102-*i* can consume energy, and
vi. when and how much energy appliance 102-*i* should send from its own energy-storage device to hub 101.
For example, energy-use controller can direct appliance 102-i to draw no more than 10 watts from hub 101 when appliance 102-i is not engaged in a telephone call and to draw any additional needed energy from its energy-storage device. Furthermore, energy-usage controller can direct appliance 102-i to turn off its display during non-business hours and to draw 10 watts from hub 101 from 2:00 AM to 4:00 AM to recharge its energy-storage device. The details of energy-use controller 203 are described below and in the accompanying figures.

Energy-storage device 204 is hardware for storing energy for use by hub 101 and appliance 102-*i*. It is clear to those skilled in the art how to make and use energy-storage device 204.

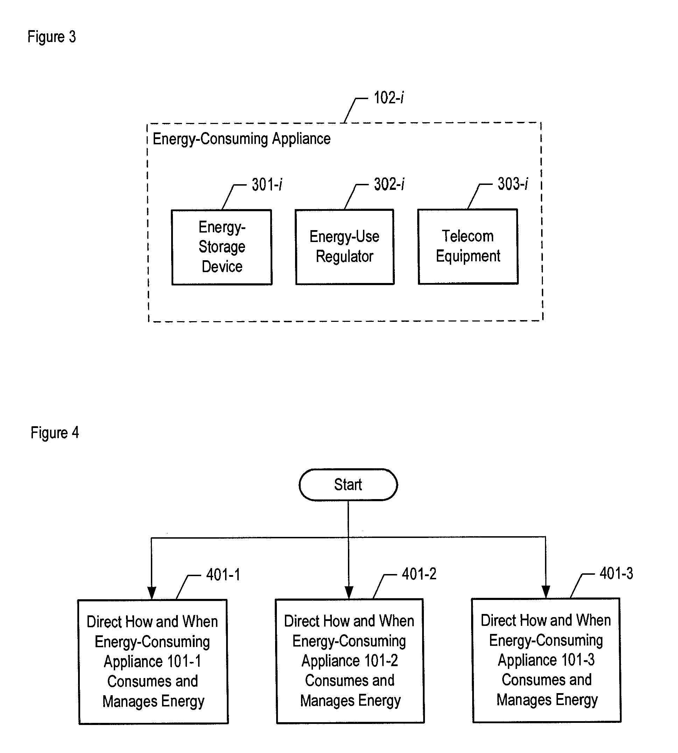

**Figure 3** depicts a block diagram of the salient components of appliance 102-i in accordance with the illustrative embodiment of the present invention. Appliance 102-*i* comprises: energy-storage device 301-*i*, energy-use regulator 302-*i*, and telecom equipment 303-*i*.

Energy-storage device 301-*i* is hardware for storing energy in well-known fashion.

Energy-use regulator 302-*i* is hardware and software for:
i. receiving directions from energy-use controller 203 for when appliance 102-*i* can use and consume energy and for what purposes, and
ii. transmitting statistics to energy-use controller 203 on the use and consumption of energy by appliance 102-*i*, and
iii. controlling when appliance 102-*i* uses energy from the hub 101 (under the direction of energy-use controller 203), and
iv. controlling how much energy appliance 102-*i* uses from the hub 101 (under the direction of energy-use controller 203), and
v. controlling when appliance 102-*i* uses energy from energy-storage device 401-*i* (under the direction of energy-use controller 203), and
vi. controlling how much energy appliance 102-*i* uses from energy-storage device 401-*i* (under the direction of energy-use controller 203), and
vii. controlling when appliance 102-*i* recharges energy-storage device 401-*i* (under the direction of energy-use controller 203), and
viii. controlling how much energy appliance 102-*i* can use to recharge energy-storage device 401-*i* (under the direction of energy-use controller 203), and
ix. controlling when appliance 102-*i* transmits energy from energy-storage device 104-*i* to hub 101 (under the direction of energy-use controller 203).
x. controlling how much energy appliance 102-*i* transmits energy from energy-storage device 104-*i* to hub 101 (under the direction of energy-use controller 203).
It will be clear to those skilled in the art, after reading this specification, how to make and use energy-use regulator 302-*i*.

Telecom equipment 303-*i* is hardware and software for enabling a user of appliance 102-*i* to telecommunicate. It is well known to those skilled in the art how to make and use telecom equipment 303-*i*.

**Figure 4** depicts a flowchart of the salient tasks associated with the operation of the illustrative embodiment of the present invention. In accordance with the illustrative embodiment, energy-use controller 203 performs tasks 401-1, 401-2, and 401-3 concurrently. It will be clear to those skilled in the art, however, after reading this disclosure, how to make and use alternative embodiments of the present invention in which tasks 401-1, 401-2, and 401-3 are not performed concurrently (*e.g.,* are performed serially, *etc.*).

At task 401-1, energy-use controller 303 directs how and when appliance 101-1 uses and manages energy. The details of task 401-1 are described below and in the accompanying figures.

At task 401-2, energy-use controller 303 directs how and when appliance 101-2 uses and manages energy. The details of task 401-2 are described below and in the accompanying figures.

At task 401-3, energy-use controller 303 directs how and when appliance 101-3 uses and manages energy. The details of task 401-3 are described below and in the accompanying figures.

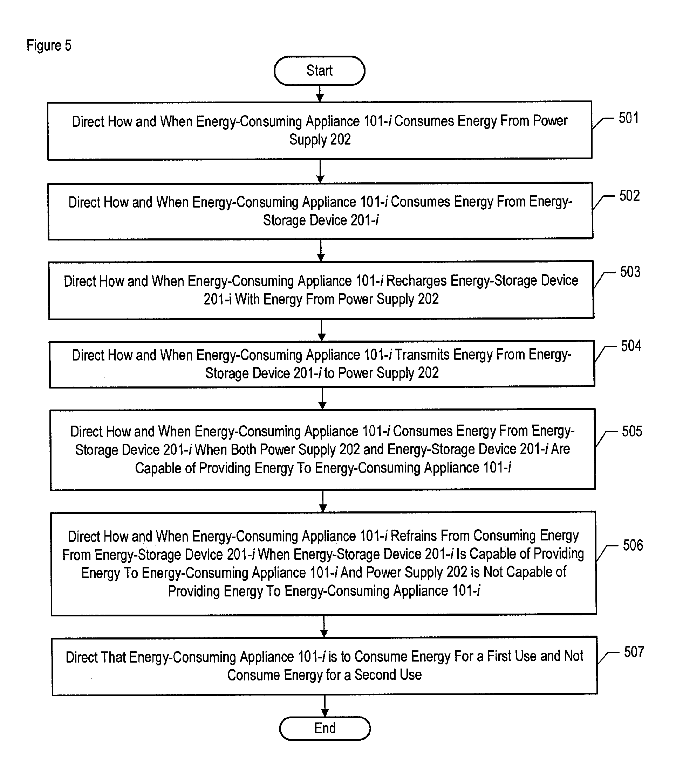

**Figure 5** depicts a flowchart of the salient tasks associated with the operation of task 401-*i*.

At task 501, energy-use controller 501-*i* directs how and when energy consuming appliance 101-*i* uses energy from energy supply 202.

At task 502, energy-use controller 501-*i* directs how and when energy consuming appliance 101-*i* uses energy from energy-storage device 301-*i*.

At task 503, energy-use controller 501-*i* directs how and when appliance 101-*i* recharges energy-storage device 301-*i* with energy from power supply 302.

At task 504, energy-use controller 501-*i* directs how and when appliance 101-*i* transmits energy from energy-storage device 301-*i* to power supply 302.

At task 505, energy-use controller 501-*i* directs how and when appliance 101-*i* uses energy from energy- storage device 301-*i* when both power supply 302 and energy-storage device 301-*i* are capable of providing energy to appliance 101-*i*.

At task 506, energy-use controller 501-*i* directs how and when appliance 101-*i* refrains from consuming energy from energy-storage device 301-*i* when energy-storage device 301-*i* is capable of providing energy to appliance 101-*i* and power supply 302 is not capable of providing energy to appliance 101-i.

At task 507, energy-use controller 501-*i* directs that appliance 101-*i* is to consume energy for a first use and not consume energy for a second use.

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A system comprising:
(1) a first appliance associated with a first energy-storage device;
(2) a second appliance associated with a second energy-storage device;
(3) a power supply for providing energy to the first appliance and the second appliance; and
(4) an energy-use controller for directing:
(i) when the first appliance uses energy from the power supply,
(ii) when the first appliance uses energy from the first energy-storage device, and
(iii) when the first appliance recharges the first energy-storage device,
(iv) when the second appliance uses energy from the power supply,
(v) when the second appliance uses energy from the second energy-storage device, and
(vi) when the second appliance recharges the second energy-storage device.

2. The system of claim 1 wherein the controller also directs:
(vii) when the first appliance takes energy from the first energy-storage device during intervals when both the power supply and the first energy-storage device are capable of providing energy to the first appliance, and
(viii) when the second appliance takes energy from the second energy-storage device during intervals when both the power supply and the second energy-storage device are capable of providing energy to the second appliance.

3. The system of claim 1 wherein the controller also directs:
(vii) when the first appliance supplies energy from the first energy-storage device to the second appliance, and
(viii) when the second appliance supplies energy from the second energy-storage device to the first appliance.

4. The system of claim 1 wherein the controller also directs:
(vii) when the first appliance is to refrain from taking energy from the first energy-storage device during intervals when the first energy-storage device is capable of providing energy to the first appliance but the power supply is not capable of providing energy to the first device, and
(viii) when the second appliance is to refrain from taking energy from the second energy-storage device during intervals when the second energy-storage device is capable of providing energy to the second appliance but the power supply is not capable of providing energy to the second device.

5. The system of claim 1 wherein the controller also directs:
(vii) the first appliance to consume energy for a first use and to refrain from consuming energy for a second use, and
(viii) the second appliance to consume energy for the first use and to refrain from consuming energy for the second use.

6. The system of claim 1 further comprising (5) a telecommunications switch for coordinating communication between the first appliance and the second appliance.

7. A method comprising:
directing when a first appliance takes energy from a first energy-storage device during intervals when both a power supply and the first energy-storage device are capable of providing energy to the first appliance; and
directing when a second appliance takes energy from a second energy-storage device during intervals when both the power supply and the second energy-storage device are capable of providing energy to the second appliance.

8. The method of claim 7 further comprising:
directing the first appliance to supply energy from the first energy-storage device to the second appliance; and
directing the second appliance to supply energy from the second energy-storage device to the first appliance.

9. The method of claim 7 further comprising:
directing when the first appliance is to refrain from taking energy from the first energy-storage device during intervals when the first energy-storage device is capable of providing energy to the first appliance but the power supply is not capable of providing energy to the first device, and
directing when the second appliance is to refrain from taking energy from the second energy-storage device during intervals when the second energy-storage device is capable of providing energy to the second appliance but the power supply is not capable of providing energy to the second device.

10. The method of claim 7 further comprising:
directing the first appliance to consume energy for a first use and to refrain from consuming energy for a second use, and
directing the second appliance to consume energy for the first use and to refrain from consuming energy for the second use.

11. A method comprising:
directing when a first appliance is to refrain from taking energy from a first energy-storage device during intervals when a first energy-storage device is capable of providing energy to the first appliance but a power supply is not capable of providing energy to the first device, and
directing when a second appliance is to refrain from taking energy from a second energy-storage device during intervals when the second energy-storage device is capable of providing energy to the second appliance but the power supply is not capable of providing energy to the second device.

12. The method of claim 11 further comprising:
directing the first appliance to supply energy from the first energy-storage device to the second appliance; and
directing the second appliance to supply energy from the second energy-storage device to the first appliance.

13. The method of claim 11 further comprising:
directing the first appliance to consume energy for a first use and to refrain from consuming energy for a second use, and
directing the second appliance to consume energy for the first use and to refrain from consuming energy for the second use.

14. The method of claim 11 further comprising coordinating communication between the first appliance and the second appliance.

15. A method comprising directing from a controller:
(i) when a first appliance can consume energy from a power supply, a first energy-storage device, and a second energy-storage device, and
(ii) when a second appliance can consume energy from the power supply, the first energy-storage device, and the second energy-storage device, and
(iii) when the first appliance recharges the first energy-storage device with energy from the power supply, and
(iv) when the second appliance recharges the second energy-storage device with energy from the power supply.
